# FASCICULE DE BREVET EUROPEEN

(11) **EP 2 794 364 B1**
(45) Date de publication et mention de la délivrance du brevet: **16.03.2016**
(21) Numéro de dépôt: 12808380.5
(22) Date de dépôt: 20.12.2012
(51) Int. Cl.: B60R 25/02, B60R 25/021

(54) **DISPOSITIF ANTIVOL POUR COLONNE DE DIRECTION DE VÉHICULE AUTOMOBILE**
DIEBSTAHLSCHUTZVORRICHTUNG FÜR DIE LENKSÄULE EINES KRAFTFAHRZEUGS
ANTI-THEFT DEVICE FOR A STEERING COLUMN OF A MOTOR VEHICLE

(30) Priorité: 21.12.2011 FR 1103989
(43) Date de publication de la demande: 29.10.2014
(73) Titulaire: Valeo Securité Habitacle, 94046 Créteil Cedex (FR)
(72) Inventeur: POGGI, Patrice, F-58000 Nevers (FR); PICHELIN, Nicolas, F-58000 Nevers (FR); DELLA FIORENTINA, Alix, F-58000 Nevers (FR)
(74) Mandataire: Huisman, Aurélien
(86) Numéro de dépôt international: PCT/EP2012/076334
(87) Numéro de publication internationale: WO 2013/092830

(56) Documents cités:
- EP-A1- 0 953 487
- EP-A1- 0 989 038
- EP-A1- 1 167 135
- EP-A2- 2 025 567
- DE-B3- 10 247 802
- US-A1- 2011 154 869

## Description

La présente invention concerne un dispositif antivol destiné à sécuriser un mécanisme pour colonne de direction de véhicule. Plus particulièrement, la présente invention concerne un dispositif antivol mettant en oeuvre un pêne mobile à même d'être verrouillé par un moyen de supercondamnation.

Le document EP 0 953 487 A1 décrit un exemple de dispositif antivol pour colonne de direction de véhicule automobile.

Les dispositif antivols comportent des moyens de verrouillage comportant un pêne monté mobile dans un corps d'antivol entre une position décondamnée dans laquelle il est destiné à être disposé à distance d'une colonne de direction et une position condamnée dans laquelle il est destiné à bloquer ladite colonne. Le pêne est commandé en déplacement par l'intermédiaire d'un rotor de verrou logé dans le corps d'antivol.

Certains dispositifs antivol à sécurité renforcée comprennent en outre un moyen de supercondamnation apte à bloquer le pêne en position condamnée en cas de tentative d'effraction. Une personne mal intentionnée peut en effet décider d'arracher le verrou pour accéder au pêne, afin de le désactiver en vue de libérer la rotation de la colonne de direction. La présence des moyens de supercondamnation permet de maintenir le pêne dans sa position condamnée, de sorte que la colonne demeure malgré tout bloquée en rotation.

Un but de la présente invention est de fournir un dispositif antivol pour colonne de direction de véhicule automobile dont la sécurité est renforcée dans le cas où une personne malveillante voudrait le désactiver.

Un autre but de la présente invention est de fournir un dispositif antivol encore plus robuste que ceux de l'état de la technique.

A cet effet, l'invention à pour objet un dispositif antivol pour colonne de direction de véhicule automobile comprenant :
- un moyen de verrouillage comportant un pêne monté mobile entre une position décondamnée dans laquelle il est destiné à être disposé à distance d'une colonne de direction et une position condamnée dans laquelle il est destiné à bloquer ladite colonne,
- un moyen de supercondamnation comportant un élément de blocage configuré pour bloquer le pêne en position condamnée, un moyen élastique et un organe de retenue dont une première extrémité est fixée au stator de verrou du dispositif antivol, dans lequel
le moyen de supercondamnation comporte en outre un support articulé configuré pour définir :
- une position de retenue dans laquelle l'organe de retenue permet au support articulé de retenir l'élément de blocage à distance du pêne, et
- une position libératrice dans laquelle le support articulé guide l'élément de blocage vers le pêne suivant deux déplacements successifs de directions distinctes pour bloquer ledit pêne en position condamnée, consécutivement au retrait de l'organe de retenue, caractérisé en ce que
- le support articulé comporte une butée mobile configurée pour recevoir l'élément de blocage lorsque le pêne est en position décondamnée, la butée mobile étant en outre apte à pivoter entre :
   - une position de retenue dans laquelle la butée mobile est retenue par l'organe de retenue et retient l'élément de blocage à distance du pêne, et
   - une position libératrice dans laquelle le support articulé guide l'élément de blocage vers le pêne suivant deux déplacements successifs de directions distinctes pour bloquer ledit pêne en position condamnée, consécutivement au retrait de l'organe de retenue,

Selon une ou plusieurs caractéristiques du dispositif antivol, prise seule ou en combinaison :
- un premier déplacement de l'élément de blocage est une translation et un deuxième déplacement de l'élément de blocage est une rotation,
- la butée mobile est sollicitée en torsion vers l'organe de retenue et ledit élément de blocage est sollicité en torsion et en translation vers ledit pêne,
- dans la position de retenue, le support articulé bloque la translation et la rotation de l'élément de blocage et dans la position libératrice, la rotation de la butée mobile désengage le blocage en translation de l'élément de blocage en direction dudit pêne et la translation dudit élément de blocage désengage le blocage en rotation de l'élément de blocage,
- la butée mobile comporte au moins une butée axiale pivotante apte à pivoter entre la position de retenue dans laquelle ladite butée axiale pivotante coopère avec un ergot de l'élément de blocage pour bloquer la translation de l'élément de blocage vers le pêne et la position libératrice dans laquelle la butée axiale pivotante est à distance dudit ergot,
- le support articulé comporte au moins une butée radiale fixe apte à coopérer avec un ergot de l'élément de blocage sollicité en torsion à l'encontre de ladite butée radiale fixe pour bloquer la rotation de l'élément de blocage lorsque l'élément de blocage est à distance du pêne,
- le support articulé comporte au moins une butée radiale de fin de course et une butée axiale de fin de course aptes à coopérer avec un ergot de l'élément de blocage pour bloquer la rotation et la translation de l'élément de blocage lorsque l'élément de blocage est en position de blocage du pêne,
- le support articulé comporte un socle comportant un palier périphérique présentant une protubérance d'arrêt, la butée mobile comporte une excroissance en forme de bec élastiquement sollicité à l'encontre de la protubérance d'arrêt de sorte que dans la position de retenue, le bec coopère avec l'organe de retenue pour bloquer la rotation de la butée mobile et dans la position libératrice, la butée mobile pivote dans ledit palier périphérique jusqu'à ce que le bec coopère avec la protubérance d'arrêt du palier périphérique pour bloquer la rotation de la butée mobile,
- ledit élément de blocage présente une forme de pion cylindrique apte à s'engager dans une cavité correspondante du pêne et dont la base comporte au moins un ergot radial à distance du fond,
- la butée mobile et l'élément de blocage sont coaxiaux, la butée mobile présentant au moins un secteur traversant dont les parois radiales portent respectivement la butée axiale pivotante et la butée radiale de fin de course,
- le socle présente un palier central logé sous la butée mobile, le palier central présentant au moins une encoche axiale dans laquelle un ergot de l'élément de blocage est apte à se translater au cours du premier déplacement de l'élément de blocage en position libératrice et en ce qu'une paroi latérale de l'encoche porte la butée radiale fixe, l'élément de blocage étant apte à pivoter selon le deuxième déplacement en position libératrice dans le palier central et le sommet du palier central portant la butée axiale de fin de course,
- le dispositif antivol comporte un moyen élastique interposé entre ledit élément de blocage et ladite butée mobile de sorte que la butée mobile soit sollicitée en torsion et ledit élément de blocage soit sollicité en torsion et en translation vers le pêne,
- ledit moyen élastique comporte un ressort hélicoïdal apte à être précontraint en compression et en torsion,
- ledit dispositif antivol comporte :
   - une première et une deuxième partie de corps d'antivol,
   - un stator de verrou inséré dans ladite deuxième partie de corps d'antivol, la première partie de corps d'antivol recevant les moyens de verrouillage et de supercondamnation, et
   - un capot de protection comportant une patte s'étendant dans la première partie du corps d'antivol, dont l'extrémité présente un forme de crochet entourant une section d'une pige de l'organe de retenue.

En fonctionnement, l'élément de blocage est maintenu à distance du pêne par le support articulé, lui-même retenu par l'organe de retenue.

En cas d'arrachement du verrou par une personne mal intentionnée, l'organe de retenue est entraîné avec le verrou. Le support articulé se met en mouvement dans la position libératrice libérant l'élément de blocage selon un premier déplacement. Ce pivotement désengage le blocage de l'élément de blocage selon un deuxième déplacement consécutif. L'élément de blocage s'immobilise dans cette dernière position, bloquant le pêne.

Une fois que l'élément de blocage s'est déplacé selon les deux déplacements consécutifs, il ne peut plus retourner simplement dans la position initiale de retenue. Une pluralité de déplacements successifs inverses doivent être réalisés pour désengager l'élément de blocage de la cavité du pêne, ainsi ce qui complexifie le désenclenchement du moyen de supercondamnation. Les déplacements successifs permettent d'éviter qu'une personne mal intentionnée repousse l'élément de blocage à l'encontre de son rappel élastique pour décondamner le pêne.

De plus, dans le cas où le support articulé comporte une butée mobile apte à pivoter, le pivotement de ladite butée mobile en position libératrice obstrue l'orifice du logement de l'organe de retenue laissé vaquant par le retrait de l'organe de retenue, bloquant ainsi toute tentative d'accès frauduleuse à cet endroit par un outil de vandalisme.

D'autres avantages et caractéristiques apparaîtront à la lecture de la description de l'invention, ainsi que sur les figures annexées sur lesquelles :
- la figure 1 représente une vue en perspective d'un dispositif antivol à l'état assemblé,
- la figure 2 représente le dispositif antivol de la figure 1 à l'état désassemblé,
- la figure 3 représente le dispositif antivol de la figure 1 dont le corps d'antivol apparaît en transparence,
- la figure 4 est une vue éclatée d'éléments du moyen de supercondamnation,
- la figure 5a représente un support articulé en position de retenue,
- la figure 5b représente le support articulé de la figure 5a en position libératrice,
- la figure 6a représente le moyen de supercondamnation de la figure 5 à l'état assemblé, pour lequel l'élément de blocage est retenu dans le support articulé lui-même retenu par l'organe de retenue (schématisé par une section circulaire),
- la figure 6b est une vue analogue à la figure 6a du moyen de supercondamnation en position libératrice, pour lequel la butée mobile a pivoté après le retrait de l'organe de retenue,
- la figure 6c est une vue analogue à la figure 6b du moyen de supercondamnation en position libératrice, pour lequel l'élément de blocage a translaté vers le pêne après le pivotement de la butée mobile,
- la figure 6d est une vue analogue à la figure 6c du moyen de supercondamnation en position libératrice, pour lequel l'élément de blocage a pivoté après la translation vers le pêne de l'élément mobile et une vue d'un détail d'un ergot de l'élément de blocage en prise avec des butées axiale et radiale de fin de course,
- la figure 7a est une vue de l'élément de blocage dans la butée mobile représentée en transparence en position libératrice, l'élément de blocage ayant translaté vers le pêne après le pivotement de la butée mobile,
- la figure 7b représente une autre vue de la figure 7a dans laquelle l'élément de blocage a translaté vers le pêne après le pivotement de la butée mobile,
- la figure 7c est une vue analogue à la figure 7b de l'élément de blocage dans la butée mobile en position libératrice, l'élément de blocage ayant pivoté après la translation vers le pêne,
- la figure 8a illustre l'élément de blocage logé dans le palier central du socle du support articulé en position de retenue,
- la figure 8b est une vue analogue la figure 8a après translation de l'élément de blocage vers le pêne en position libératrice,
- la figure 9 représente un vue d'un détail du dispositif antivol de la figure 3 en position de retenue dont le corps d'antivol est représenté en transparence,
- la figure 10 est une vue agrandie d'éléments du dispositif antivol de la figure 9,
- la figure 11 est une vue analogue à la figure 10 en position libératrice, après retrait de l'organe de retenue, et
- la figure 12 représente une vue d'un autre détail du dispositif antivol de la figure 3.

Sur ces figures, les éléments identiques portent les mêmes numéros de référence.

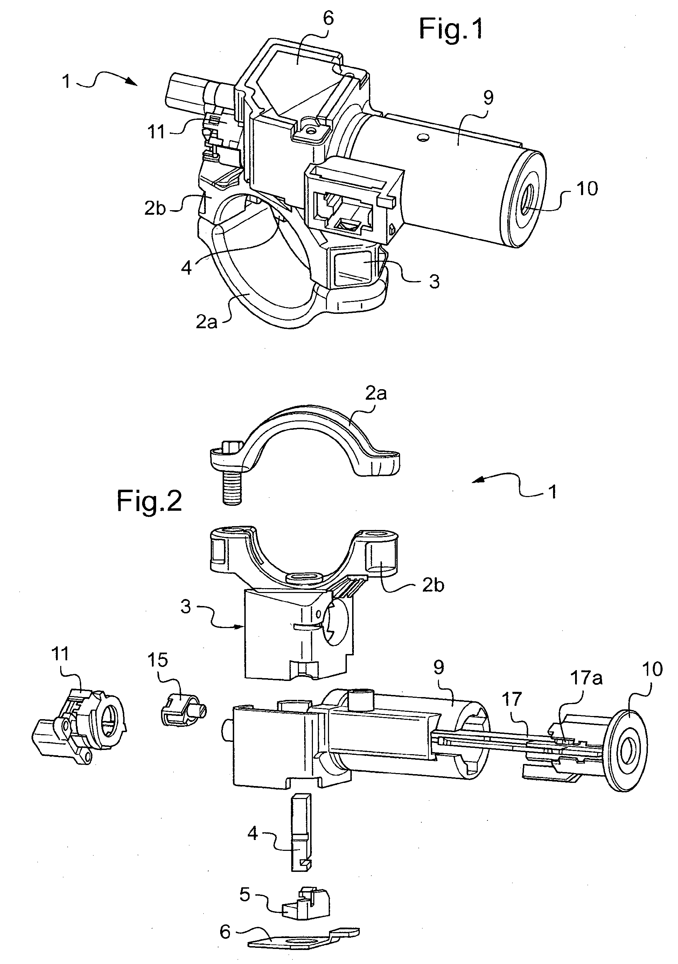

Les figures 1 à 10 illustrent un exemple de réalisation d'un dispositif antivol pour colonne de direction de véhicule automobile 1. Comme on peut le voir sur les figures 1, 2 et 3, le dispositif antivol 1 comporte un collier de serrage présentant deux demi-collier 2a, 2b aptes à s'assembler autour d'une colonne de direction (non représentée).

Le deuxième demi-collier 2b est intégré dans une première partie corps d'antivol 3 (figure 2) qui loge un moyen de verrouillage de la colonne de direction et un moyen de supercondamnation 15 agencé pour verrouiller le moyen de verrouillage en position condamnée suite à une tentative d'effraction du dispositif antivol 1. La première partie du corps d'antivol 3 est par exemple en matériau « Zamak » de manière à présenter une bonne résistance mécanique en position sur la colonne, protégeant les moyens de verrouillage et de supercondamnation.

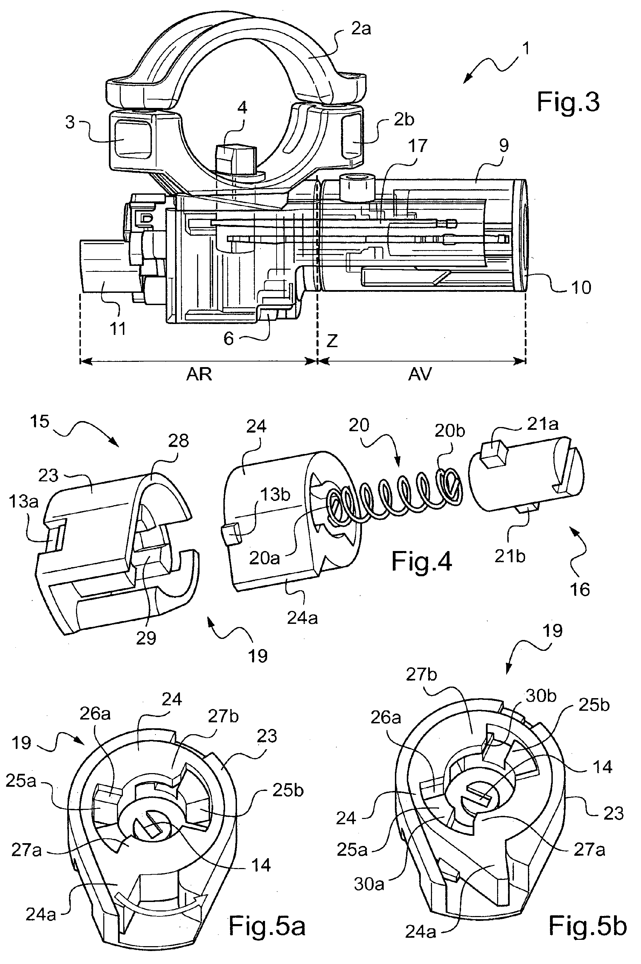

Le moyen de verrouillage comporte un pêne 4 monté coulissant dans la première partie du corps d'antivol 3, via un guide pêne, entre une position décondamnée dans laquelle il est en position escamotée arrière, à distance de la colonne de direction et une position condamnée (figures 1 et 3) dans laquelle il est destiné à bloquer la colonne en faisant saillie du deuxième demi-collier 2b pour coopérer classiquement par emboîtement avec un élément de la colonne de direction. Le moyen de verrouillage comporte en outre un moyen d'entraînement 5 du pêne 4 apte à entraîner le pêne 4 en position condamnée ou décondamnée. Le déplacement du moyen d'entraînement 5 est commandé par la rotation d'un rotor de verrou. En outre, le dispositif antivol 1 peut comporter un capot de protection 6 (figure 2), disposé sur une ouverture de ladite première partie du corps d'antivol 3 en regard du pêne 4, pour fermer cette ouverture.

Un verrou (non représenté) est destiné à être inséré et solidarisé à l'intérieur d'une deuxième partie du corps d'antivol 9, par exemple en plastique, du dispositif antivol 1, couvrant également partiellement la première partie du corps d'antivol 3. Le verrou comporte un stator de verrou 10 destiné à être fixé en face avant de la deuxième partie du corps d'antivol 9. Le stator de verrou 10 présente une ouverture circulaire pour rendre accessible une entrée de clef à l'avant du rotor de verrou. Une came du dispositif antivol 1 est destinée à être solidarisée à l'extrémité arrière du rotor de verrou. Une fois montés ensemble dans la deuxième partie du corps d'antivol 9, le rotor de verrou et la came tournent ensemble, une première partie de la came entraînant le moyen d'entraînement 5 du pêne 4. Le verrou est également destiné à commander l'activation des fonctions électriques du véhicule, ainsi que le démarrage du moteur. Il est pour cela couplé par l'intermédiaire d'une deuxième partie de la came à un interrupteur 11 dudispositif antivol 1 qui est par exemple fixé à la deuxième partie du corps d'antivol 9 (figures 1 et 2).

Comme représenté en pointillés sur la figure 3, le dispositif antivol 1 comporte une zone fusible Z plus vulnérable, destinée à céder en premier par exemple en cas de sollicitations de torsion, de flexion ou encore d'arrachement. La zone fusible Z sépare ainsi une partie avant AV du dispositif antivol 1 destinée à comporter le verrou, d'une partie arrière AR comportant la première partie du corps d'antivol 3 et les moyens de verrouillage et de supercondamnation. On favorise ainsi la rupture du dispositif antivol au niveau de la zone fusible Z, pour garantir la supercondamnation du moyen de verrouillage en cas de vandalisme.

Mieux visible sur les figures 1 et 4, le moyen de supercondamnation 15 comporte un élément de blocage 16, un moyen élastique 20, un organe de retenue 17 et un support articulé 19.

L'élément de blocage 16 est configuré pour bloquer le pêne 4 en position condamnée. Il présente par exemple une forme de pion cylindrique apte à s'engager dans une cavité 22 correspondante du pêne 4 (voir figure 4) et une base comportant par exemple deux ergots radiaux 21a, 21 b, diamétralement opposés et disposés sensiblement à hauteur du fond du pion.

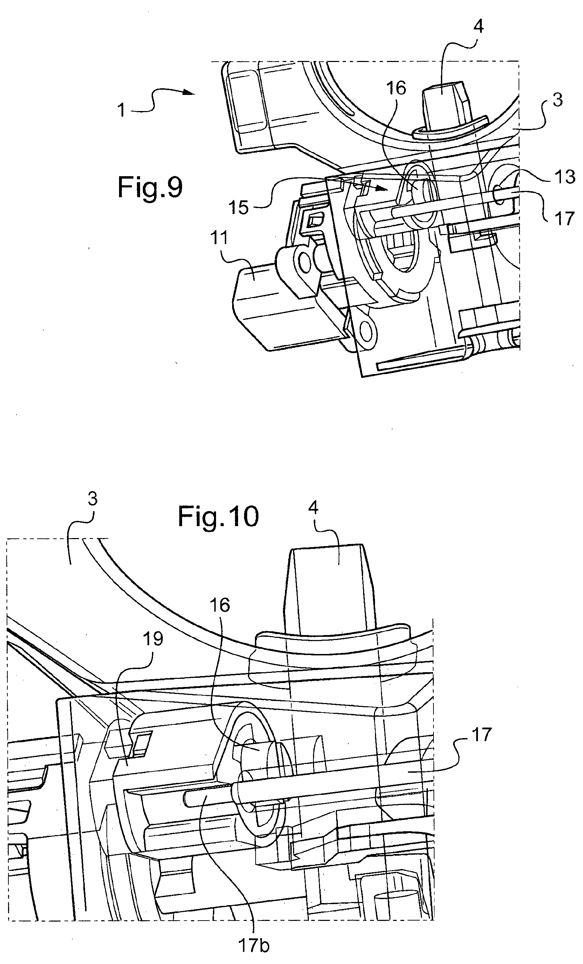

L'organe de retenue 17 présente par exemple la forme d'une pige dont une première extrémité 17a est fixée au stator de verrou 10 et la deuxième extrémité 17b est libre. La pige est guidée en translation par un logement 13 ménagé dans la première partie du corps d'antivol 3 (figure 9). Ainsi, l'organe de retenue 17 est retiré avec le verrou en cas de tentative de désolidarisation du verrou.

Selon l'invention, le support articulé 19 est configuré pour définir :
- une position de retenue dans laquelle l'organe de retenue 17 permet au support articulé 19 de retenir l'élément de blocage 16 à distance du pêne 4, et
- une position libératrice dans laquelle le support articulé 19 guide l'élément de blocage 16 vers le pêne 4 suivant deux déplacements successifs de direction distinctes D1, D2 pour bloquer ledit pêne 4 en position condamnée, consécutivement au retrait de l'organe de retenue 17.

Selon l'exemple illustré, le support articulé 19 comporte un socle 23 et une butée mobile 24 montée pivotante dans le socle 23, ladite butée mobile 24 recevant l'élément de blocage 16.

La butée mobile 24 est assemblée au socle 23 via des moyens d'assemblage 13a, 13b complémentaires (figure 4) autorisant le pivotement relatif de la butée mobile 24 dans le socle 23 mais bloquant le déplacement axial.

Le moyen élastique 20 est interposé entre l'élément de blocage 16 et la butée mobile 24 de sorte que la butée mobile 24 soit sollicitée en torsion vers l'extrémité 17b libre de l'organe de retenue 17 et l'élément de blocage 16 soit sollicité vers le pêne 4.

La butée mobile 24 est apte à pivoter entre une position de retenue (figure 5a) et une position libératrice (figure 5b) de l'élément de blocage 16 du pêne 4.

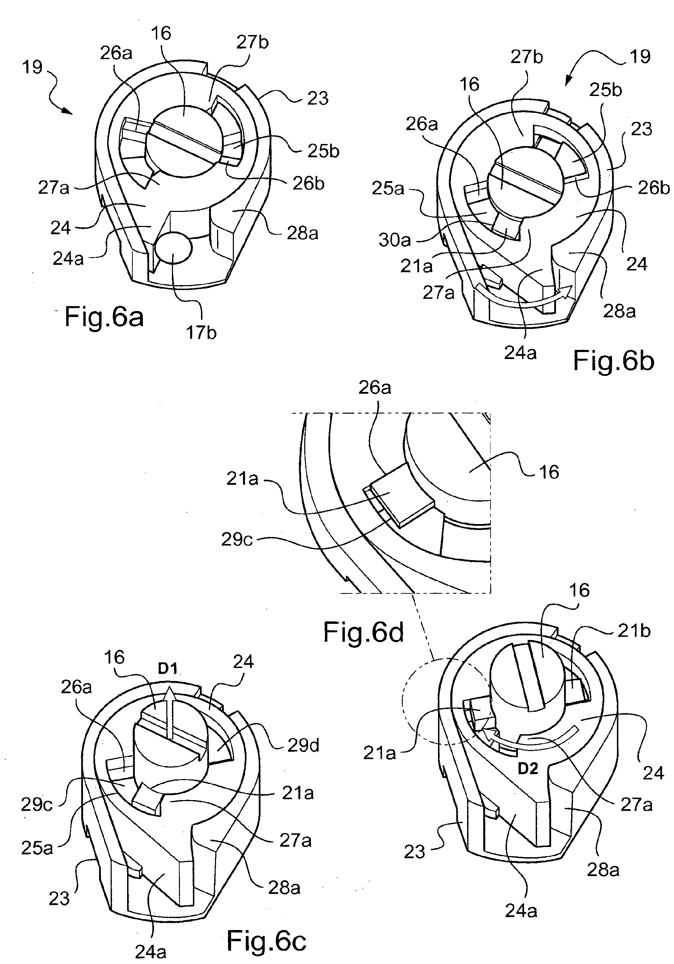

Dans la position de retenue, la butée mobile 24 est retenue par l'organe de retenue 17 (figure 6a) et retient l'élément de blocage 16 à distance du pêne 4 en bloquant la translation et la rotation de l'élément de blocage 16 (figures 9, 10 et 12).

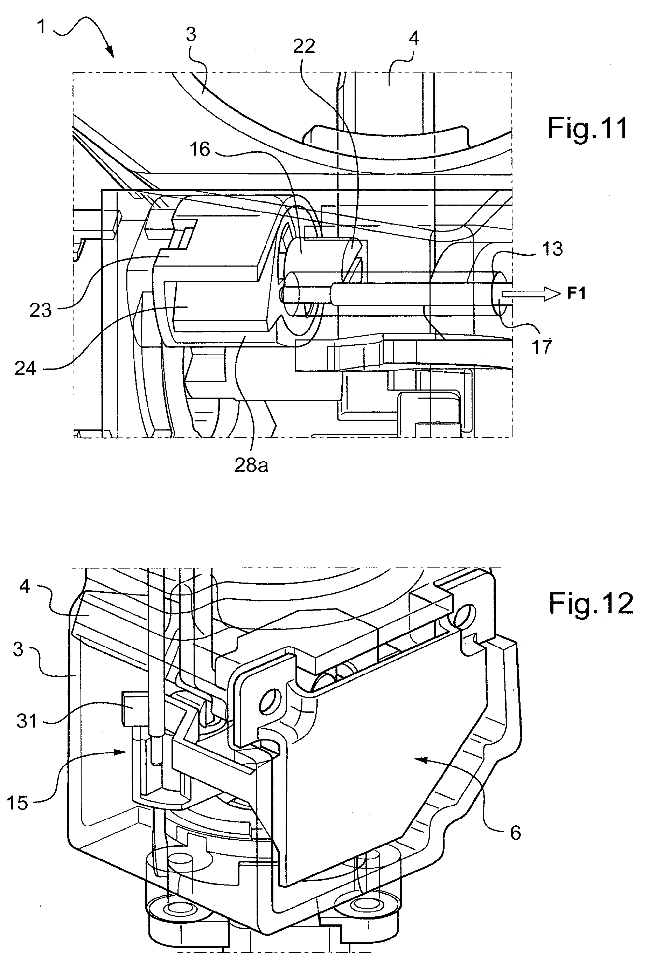

Dans la position libératrice, le support articulé 19 guide l'élément de blocage 16 vers le pêne 4 suivant deux déplacements successifs de directions distinctes D1, D2 (figures 6b, 6c et 6d), pour bloquer le pêne 4 en position condamnée, consécutivement au retrait de l'organe de retenue 17 (figure 11).

Les déplacements successifs doivent être de direction distincte et peuvent être de nature distincte. Ainsi par exemple, un premier déplacement peut être une translation et un deuxième déplacement peut être une rotation.

Bien que non illustrées par la suite, d'autres réalisations de déplacements successifs et de directions distinctes sont envisageables, par exemple un premier déplacement est une translation verticale et un deuxième déplacement est une translation horizontale. Selon un autre exemple, un premier déplacement est une rotation et un deuxième déplacement est une translation.

Dans l'exemple décrit ci-après, le support articule 19 est conformé pour coopérer avec l'élément de blocage 16 en le guidant suivant un premier déplacement de translation D1 et un deuxième déplacement successif de rotation D2 pour bloquer le pêne 4 en position condamnée consécutivement au retrait de l'organe de retenue 17.

Pour cela, le moyen élastique 20 est précontraint de manière à solliciter l'élément de blocage 16 en torsion autour de son axe de révolution et en translation vers le pêne 4.

La butée mobile 24 présente une forme générale cylindrique s'étendant radialement par une excroissance en forme de bec 24a. Le bec 24a coopère avec la deuxième extrémité 17b de l'organe de retenue 17 pour bloquer la rotation de la butée mobile en position de retenue (figure 6a).

Le moyen élastique 20 comporte par exemple un ressort hélicoïdal. Une première extrémité 20a du ressort 20 est fixée via un moyen de fixation 14 de la butée mobile 24 (figures 5a et 5b), par exemple au centre de cette dernière. La deuxième extrémité 20b du ressort 20 est fixée, par exemple de la même manière, dans le fond de la partie cylindrique de l'élément de blocage 16.

Le moyen élastique 20 ainsi agencé est précontraint en torsion et en compression et sollicite la butée mobile 24 et l'élément de blocage dans des sens de rotation opposés. Ainsi, le moyen élastique 20 sollicite la butée mobile 24 en torsion dans le sens anti-horaire sur les figures et sollicite l'élément de blocage 16 en torsion dans le sens horaire.

La butée mobile 24 est ainsi sollicitée vers l'organe de retenue 17 et peut pivoter entre la position de retenue (figure 6a) dans laquelle la butée mobile 24 est bloquée par l'organe de retenue 17 et la position libératrice dans laquelle le retrait de l'organe de retenue 17 désengage le blocage en rotation de la butée mobile 24.

La butée mobile 24 et l'élément de blocage 16 sont coaxiaux. La butée mobile 24 présente en outre deux secteurs 25a, 25b traversant axialement la portion cylindrique.

Sur chaque secteur 25a, 25b, une paroi latérale radiale porte une butée radiale de fin de course 26a, 26b et la paroi latérale opposée forme un épaulement saillant vers le secteur 25a, 25b pour former une butée axiale pivotante 27a, 27b.

Les butées axiales pivotantes 27a, 27b coopèrent avec la partie supérieure de l'ergot 21a, 21b respectif de l'élément de blocage 16 pour bloquer la translation de l'élément de blocage 16 sollicité en translation vers le pêne 4 dans la position de retenue.

La rotation de la butée mobile 24 dans la position libératrice fait pivoter la butée axiale pivotante 27a, 27b à l'écart de l'ergot 21a, 21b, ce qui désengage le blocage en translation de l'élément de blocage 16 du pêne 4.

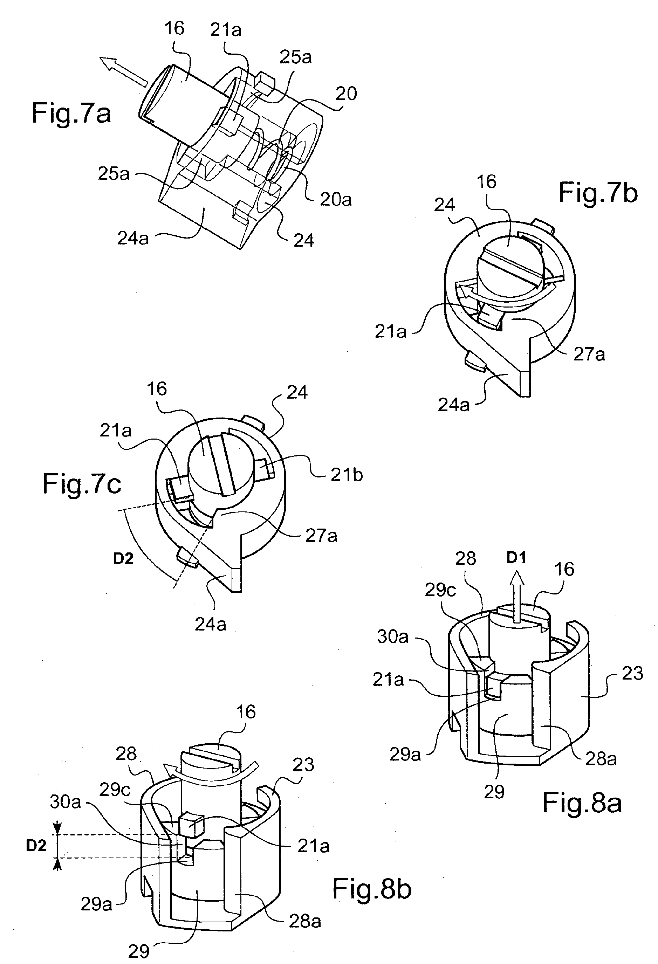

Comme on peut le voir sur les figures 8a et 8b, le socle 23 comporte un palier périphérique 28 recevant la butée mobile 24 et un palier central 29 recevant l'élément de blocage 16 du pêne 4.

Le socle 23 est par exemple réalisé en une seule pièce. En outre, la butée mobile 24 présente une cavité centrale logeant l'élément de blocage 16 et permettant son guidage dans le palier central 29.

Le palier périphérique 28 présente par exemple une forme en étrier dont une extrémité présente une protubérance d'arrêt 28a. La protubérance d'arrêt 28a est disposée à l'arrière de l'extrémité de l'organe de retenue 17, de sorte qu'en cas de retrait de l'organe de retenue 17, le bec 24a de la butée mobile 24 soit élastiquement sollicité à l'encontre de la protubérance d'arrêt 28a.

Ainsi, en cas de retrait de l'organe de retenue 17, la butée mobile 24 libérée en rotation pivote dans le palier périphérique 28, le palier périphérique 28 supportant et guidant en rotation la butée mobile 24 jusqu'à la protubérance d'arrêt 28a. La protubérance d'arrêt 28a bloque la rotation de la butée mobile 24 en coopérant avec son bec 24a.

La rotation de la butée mobile 24 a pour effet de désengager le blocage en translation de l'élément de blocage 16 en direction du pêne 4.

La translation consécutive de l'élément de blocage 16 sur une course axiale C1 en direction du pêne 4 suite au retrait de l'élément de retenue 17 selon le premier déplacement de l'élément de blocage en position libératrice (figures 7a, 7b) a pour effet de désengager le blocage en rotation de l'élément de blocage 16, ce qui permet sa rotation (figure 7c).

Le palier central 29 est situé au centre du palier périphérique 28, logé sous la butée mobile 24. Le palier central 29 supporte et guide en rotation l'élément de blocage 16 selon son deuxième déplacement en position libératrice.

Par ailleurs, le palier central 29 comporte deux encoches axiales 29a, 29b de profondeur axiale C1.

En position de retenue, les ergots 21 a, 21b de l'élément de blocage 16 sollicité en torsion (dans le sens horaire sur les figures 6d, 7b, 7c, 8b) sont en butée contre une paroi latérale de l'encoche 29a, 29b respective dans laquelle ils sont logés. La paroi latérale de l'encoche 29a, 29b forme ainsi une butée radiale fixe 30a, 30b pour une portion latérale de l'ergot 21a, 21b de l'élément de blocage 16 bloquant sa rotation en position de retenue lorsqu'il est à distance du pêne 4.

Après désengagement du blocage en translation de l'élément de blocage 16, les encoches 29a, 29b coopèrent avec les ergots 21 a, 21b pour guider la translation de l'élément de blocage 16 vers le pêne 4 sur la course axiale C1 au cours du premier déplacement de l'élément de blocage en position libératrice.

La translation de l'élément de blocage 16 vers le pêne 4, désengage les ergots 21 a, 21 b des encoches 29a, 29b et donc des butées radiales fixes 30a, 30b. L'élément de blocage 16 pivote alors dans le palier central 29. Ce dernier, en prise avec la couronne de l'élément de blocage 16 située en dessous des ergots 21a, 21b, supporte et guide la rotation de l'élément de blocage 16.

Par ailleurs, la partie supérieure du palier central 29 (entre deux encoches 29a, 29b) forme deux butées axiales de fin de course 29c, 29d aptes à coopérer avec les portions inférieures des deux ergots 21a, 21b de l'élément de blocage 16 pour bloquer la translation de l'élément de blocage 16 lorsqu'il est en position de blocage du pêne 4.

Egalement, les butées radiales de fin de course 26a, 26b portées par les parois latérales radiales des secteurs 25a, 25b de la butée mobile 24 coopèrent avec les portions latérales respectives des deux ergots 21a, 21b de l'élément de blocage 16 pour bloquer sa rotation lorsque l'élément de blocage 16 est en position de blocage du pêne 4.

En fonctionnement, dans la position de retenue (figures 7, 9 et 10), l'élément de blocage 16 est rentré : il est partiellement reçu dans le support articulé 19. L'élément de blocage 16 est sollicité en translation à l'encontre du pêne 4 et est maintenu à distance par la butée axiale pivotante 27a, 27b de la butée mobile 24. La butée mobile 24 est élastiquement sollicitée (sens antihoraire) vers la protubérance d'arrêt 28a du socle 23 et est bloquée en rotation par l'organe de retenue 17. L'élément de blocage 16 est élastiquement sollicité en torsion (sens horaire) et est maintenu bloqué en rotation par les parois latérales des encoches 29a, 29b, du palier central 29.

En cas d'arrachement du verrou par une personne mal intentionnée, l'organe de retenue 17 est entraîné avec le verrou selon la direction de la flèche F1 (figure 11). La butée mobile 24 pivote alors vers la protubérance d'arrêt 28a. L'élément de blocage 16 qui n'est plus retenu en translation mais qui reste bloqué en rotation, se translate en faisant saillie vers le pêne 4 (flèche D1 sur les figures 5 et 8). Le sommet de l'élément de blocage 16 s'engage dans la cavité 22 du pêne 4 et le bloque en position condamnée (figure 8). La translation de l'élément de blocage 16 en direction du pêne 4 sur la course axiale C1 désengage la base de l'élément de blocage 16 des encoches 29a, 29b du palier central 29. L'élément de blocage 16 pivote alors selon la flèche D2 (figures 6 et 8) jusqu'à une butée radiale 26a après une course radiale C2, qui correspond à l'angle de dégagement du secteur 25a, 25b. L'élément de blocage 16 est alors bloqué en rotation et en translation par les butées axiales et radiales de fin de course 29c, 29d, 26a, 26b.

Une fois que l'élément de blocage 16 s'est translaté et a pivoté dans le support articulé 19, il ne peut plus retourner simplement dans la position initiale de retenue. Deux déplacements successifs inverses doivent être réalisés pour désengager l'élément de blocage 16 de la cavité 22 du pêne 4, ainsi qu'un déplacement de l'élément mobile 24 dans le socle 23 ce qui corse le désenclenchement du moyen de supercondamnation 15, compliquant sa réversibilité. Ces trois déplacements successifs permettent d'éviter qu'une personne mal intentionnée repousse l'élément de blocage 16 à l'encontre de son rappel élastique pour décondamner le pêne.

De plus, le pivotement de la butée mobile 24 en position libératrice obstrue l'orifice du logement 13 de l'organe de retenue 17 laissé vaquant par le retrait de l'organe de retenue 17, bloquant ainsi toute tentative d'accès frauduleuse à cet endroit par un outil de vandalisme.

De même, en cas de rotation en force du verrou par une personne mal intentionnée ou de flexion en force du verrou, l'organe de retenue 17 solidaire du verrou à sa première extrémité 17b se casse. Une première partie de l'organe de retenue 17 comprenant la première extrémité 17b part avec le verrou tandis qu'une deuxième partie de l'organe de retenue 17 est repoussée vers l'extérieur du corps d'antivol 3 par le moyen élastique. Comme précédemment, la butée mobile 24 pivote alors vers la protubérance d'arrêt 28a et l'élément de blocage 16 qui n'est plus retenu peut alors bloquer le pêne 4 en position condamnée.

Egalement, pour éviter une tentative d'effraction par enfoncement ou arrachement du capot de protection 6 par une personne mal intentionnée qui souhaiterait atteindre les moyens de verrouillage, on prévoit que le capot de protection 6 soit couplé à la pige de l'organe de retenue 17. Pour cela, le capot de protection 6 présente la forme d'une plaque se prolongeant dans la première partie du corps d'antivol 3 par une patte 31 s'étendant dans la première partie du corps d'antivol 3 et dont l'extrémité présente un forme de crochet entourant une section de la pige de l'organe de retenue 17 (figure 12).

En cas de tentative d'effraction du capot de protection 6, celui-ci transmet le mouvement d'enfoncement ou d'arrachement à la pige du moyen de retenue 17 qui se fléchit l'organe de retenue 17 qui s'écarte du bec 24a de la butée mobile 24. La butée mobile 24 n'est alors plus retenue, ce qui entraîne comme précédemment, le blocage du pêne 4 en position condamnée.

Ainsi, les tentatives d'effraction par une personne mal intentionnée cherchant à désactiver le moyen de verrouillage de la colonne de direction du véhicule automobile conduisent au déclenchement du moyen de supercondamnation du dispositif antivol 1. En cas d'arrachement du verrou, de rotation ou flexion en force du verrou ou en cas de tentative d'arrachement ou d'enfoncement du capot de protection 6, le moyen de supercondamnation 15 est enclenché bloquant le pêne 4 en position condamnée. L'élément de blocage 16 ne peut plus retourner simplement dans la position initiale passive sans effectuer deux déplacements successifs inverses D2, D1 pour se désengager du pêne 4, ainsi qu'un déplacement inverse de l'élément mobile 24 dans le socle 23 ce qui corse le désenclenchement du moyen de supercondamnation 15, ce qui renforce l'inviolabilité du dispositif antivol 1.

## Revendications

1. Dispositif antivol pour colonne de direction de véhicule automobile comprenant :
- un moyen de verrouillage comportant un pêne (4) monté mobile entre une position décondamnée dans laquelle il est destiné à être disposé à distance d'une colonne de direction et une position condamnée dans laquelle il est destiné à bloquer ladite colonne,
- un moyen de supercondamnation (15) comportant un élément de blocage (16) configuré pour bloquer le pêne (4) en position condamnée, un moyen élastique (20) et un organe de retenue (17) dont une première extrémité (17a) est fixée au stator de verrou du dispositif antivol,
dans lequel le moyen de supercondamnation (15) comporte en outre un support articulé (19) configuré pour définir :
- une position de retenue dans laquelle l'organe de retenue (17) permet au support articulé (19) de retenir l'élément de blocage (16) à distance du pêne (4), et
- une position libératrice dans laquelle le support articulé (19) guide l'élément de blocage (16) vers le pêne (4) suivant deux déplacements successifs de direction distinctes (D1, D2) pour bloquer ledit pêne (4) en position condamnée, consécutivement au retrait de l'organe de retenue (17), **caractérisé en ce que** le support articulé (19) comporte une butée mobile (24) configurée pour recevoir l'élément de blocage (16) lorsque le pêne est en position décondamnée, la butée mobile (24) étant en outre apte à pivoter entre :
- une position de retenue dans laquelle la butée mobile (24) est retenue par l'organe de retenue (17) et retient l'élément de blocage (16) à distance du pêne (4), et
- une position libératrice dans laquelle le support articulé (19) guide l'élément de blocage (16) vers le pêne (4) suivant deux déplacements successifs de directions distinctes (D1, D2) pour bloquer ledit pêne (4) en position condamnée, consécutivement au retrait de l'organe de retenue (17).

2. Dispositif antivol selon la revendication 1, **caractérisé en ce qu'**un premier déplacement (D1) de l'élément de blocage (16) est une translation et un deuxième déplacement (D2) de l'élément de blocage (16) est une rotation.

3. Dispositif antivol selon la revendication 2, **caractérisé en ce que** la butée mobile (24) est sollicitée en torsion vers l'organe de retenue (17) et ledit élément de blocage (16) est sollicité en torsion et en translation vers ledit pêne.

4. Dispositif antivol selon la revendication 3, **caractérisé en ce que** dans la position de retenue, le support articulé (19) bloque la translation (D1) et la rotation (D2) de l'élément de blocage (16) et **en ce que** dans la position libératrice, la rotation de la butée mobile (24) désengage le blocage en translation de l'élément de blocage (16) en direction dudit pêne (4) et la translation dudit élément de blocage (16) désengage le blocage en rotation de l'élément de blocage (16).

5. Dispositif antivol selon la revendication 4, **caractérisé en ce que** la butée mobile (24) comporte au moins une butée axiale pivotante (27a, 27b) apte à pivoter entre la position de retenue dans laquelle ladite butée axiale pivotante (27a, 27b) coopère avec un ergot (21, 21b) de l'élément de blocage (16) pour bloquer la translation (D1) de l'élément de blocage (16) vers le pêne (4) et la position libératrice dans laquelle la butée axiale pivotante (27a, 27b) est à distance dudit ergot (21, 21b).

6. Dispositif antivol selon l'une des revendications 4 ou 5, **caractérisé en ce que** le support articulé (19) comporte au moins une butée radiale fixe (30a) apte à coopérer avec un ergot (21, 21b) de l'élément de blocage (16) sollicité en torsion à l'encontre de ladite butée radiale fixe (30a) pour bloquer la rotation de l'élément de blocage (16) lorsque l'élément de blocage (16) est à distance du pêne (4).

7. Dispositif antivol selon l'une des revendications 4 à 6, **caractérisé en ce que** le support articulé (19) comporte au moins une butée radiale de fin de course (26a, 26b) et une butée axiale de fin de course (29c, 29d) aptes à coopérer avec un ergot (21, 21b) de l'élément de blocage (16) pour bloquer la rotation (D2) et la translation (D1) de l'élément de blocage (16) lorsque l'élément de blocage (16) est en position de blocage du pêne (4).

8. Dispositif antivol selon l'une des revendications 4 à 7, **caractérisé en ce que** le support articulé (19) comporte un socle (23) comportant un palier périphérique (28) présentant une protubérance d'arrêt (28a), la butée mobile (24) comporte une excroissance en forme de bec (24a) élastiquement sollicité à l'encontre de la protubérance d'arrêt (28a) de sorte que dans la position de retenue, le bec (24a) coopère avec l'organe de retenue (17) pour bloquer la rotation de.la butée mobile (24) et dans la position libératrice, la butée mobile (24) pivote dans ledit palier périphérique (28) jusqu'à ce que le bec (24a) coopère avec la protubérance d'arrêt (28a) du palier périphérique (28) pour bloquer la rotation de la butée mobile (24).

9. Dispositif antivol selon l'une des revendications précédentes, **caractérisé en ce que** ledit élément de blocage (16) présente une forme de pion cylindrique apte à s'engager dans une cavité (22) correspondante du pêne (4) et dont la base comporte au moins un ergot radial (21) à distance du fond.

10. Dispositif antivol selon l'une des revendications précédentes, prise avec les revendications 6 et 8, **caractérisé en ce que** la butée mobile (24) et l'élément de blocage (16) sont coaxiaux, la butée mobile (24) présentant au moins un secteur (25a, 25b) traversant dont les parois radiales portent respectivement la butée axiale pivotante (27a, 27b) et la butée radiale de fin de course (26a, 26b).

11. Dispositif antivol selon l'une des revendications précédentes, prise avec les revendications 7 et 8 et 9, **caractérisé en ce que** le socle (23) présente un palier central (29) logé sous la butée mobile (24), ledit palier central (29) présentant au moins une encoche axiale (29a, 29b) dans laquelle un ergot (21a, 21b) de l'élément de blocage (16) est apte à se translater au cours du premier déplacement (D1) de l'élément de blocage (16) en position libératrice et **en ce qu'**une paroi latérale de l'encoche (29a, 29b) porte la butée radiale fixe (29c, 29d), l'élément de blocage (16) étant apte à pivoter selon le deuxième déplacement (D2) en position libératrice dans le palier central (29) et le sommet du palier central (29) portant la butée axiale de fin de course (29c, 29d).

12. Dispositif antivol selon l'une des revendications précédentes, **caractérisé en ce qu'**il comporte un moyen élastique (20) interposé entre ledit élément de blocage (16) et ladite butée mobile (24) de sorte que la butée mobile (24) soit sollicitée en torsion et ledit élément de blocage (16) soit sollicité en torsion et en translation vers le pêne (4).

13. Dispositif antivol selon la revendication 12, **caractérisé en ce que** ledit moyen élastique (20) comporte un ressort hélicoïdal apte à être précontraint en compression et en torsion.

14. Dispositif antivol selon l'une des revendications précédentes, **caractérisé en ce qu'**il comporte :
- une première et une deuxième partie de corps d'antivol (3, 9),
- un stator de verrou inséré dans ladite deuxième partie de corps d'antivol (9), la première partie de corps d'antivol (3) recevant les moyens de verrouillage et de supercondamnation (15), et
- un capot de protection (6) comportant une patte (31) s'étendant dans la première partie du corps d'antivol (3), dont l'extrémité présente un forme de crochet entourant une section d'une pige de l'organe de retenue (17).

## Patentansprüche

1. Diebstahlsicherung für eine Kraftfahrzeuglenksäule, umfassend:
- Verriegelungsmittel eine Schraube (4) montiert ist zwischen einer entriegelten Position, in der es dazu bestimmt ist, von einer Lenksäule und einer verriegelten Position, in der es beabsichtigt ist, die die Säule blockieren entfernt angeordnet sein,
- Mittel Deadlocks (15) mit einer zur Befestigung der Schraube (4) in der verriegelten Position konfiguriert Verriegelungselement (16) elastische Mittel (20) und einen Halter (17) mit einem ersten Ende (17a) Stator befestigt, um die Diebstahlsicherung zu sperren,
wobei die Blockierungen Mittel (15) ferner einen gelenkigen Träger (19) aus konfiguriert ist, um zu definieren:
- Eine Haltestellung, in der das Halteelement (17) ermöglicht die gelenkige Lagerung (19) um das Verriegelungselement (16) von der Schraube (4) zu halten, und
- Eine Freigabestellung, in der das Pendelstütze (19) führt das Sperrelement (16) an der Schraube (4) in zwei aufeinanderfolgenden Bewegungen der unterschiedlichen Richtung (Dl, D2) zur Verriegelung des Bolzens (4) in der verriegelten Position befindet, nacheinander Rückzug des Halters (17) und daß der Drehpunkt (19) einen beweglichen Anschlag (24), konfiguriert, um das Verriegelungselement (16), wenn der Riegel in der entriegelten Position befindet, wobei der bewegliche Anschlag (24) ferner geeignet ist, zwischen drehen erhalten:
- Eine Haltestellung, in der der bewegliche Anschlag (24) durch das Halteelement (17) festgehalten und hält das Verriegelungselement (16) von der Schraube (4), und
- Eine Freigabestellung, in der das Pendelstütze (19) führt das Sperrelement (16) an der Schraube (4) in zwei aufeinanderfolgenden Bewegungen der unterschiedlichen Richtungen (Dl, D2) zur Verriegelung des Bolzens (4) in der verriegelten Position befindet, nacheinander Rückzug des Halters (17).

2. Diebstahlsicherungsvorrichtung nach Anspruch 1, **dadurch gekennzeichnet, daß** eine erste Verschiebung (D1) des Verriegelungselements (16) ist eine Übersetzung und eine zweite Verschiebung (D2) des Sperrelements (16) gedreht wird.

3. Diebstahlsicherungsvorrichtung nach Anspruch 2, **dadurch gekennzeichnet, dass** der bewegliche Anschlag (24) auf Torsion zu dem Halteteil (17) und dem Verriegelungselement (16) in Torsion belastet und translatorisch in Richtung auf die Schraube.

4. Diebstahlsicherungsvorrichtung nach Anspruch 3, **dadurch gekennzeichnet, daß** in der Haltestellung die gelenkige Lagerung (19) blockiert den Antrieb (D1) und die Drehrichtung (D2) des Sperrelements (16) und dass der befreienden Position, die Drehung des beweglichen Anschlags (24) außer Eingriff mit der Verriegelung in Translation des Verriegelungselements (16) in Richtung der Klinke (4) und die Verschiebung des Verriegelungselements (16) außer Eingriff mit der Drehblockierung der Verriegelungselement (16) aufweist.

5. Diebstahlsicherungsvorrichtung nach Anspruch 4, **dadurch gekennzeichnet, daß** der bewegliche Anschlag (24) wenigstens eine schwenkbare axiale Anschlag (27a, 27b) zwischen der Halteposition, wobei die schwenkbare axiale Anschlag (27a, 27b) mit zusammen verschwenkbar eine Lasche (21, 21b) des Verriegelungselements (16) zum Blockieren der Translation (D1) des Verriegelungselements (16) mit dem Bolzen (4) und der Freigabestellung, in welcher der schwenkbare Axialanschlag (27a , 21b), 27b) von der Nase (21 beabstandet.

6. Diebstahlsicherungsvorrichtung nach einem der Ansprüche 4 oder 5, **dadurch gekennzeichnet, dass** die gelenkige Lagerung (19) mindestens einen festen radialen Anschlag (30a) geeignet ist, mit einer Lasche (21, 21b) des Sperrgliedes (16) vorgespannt gegen Verdrehung des festen radialen Anschlag (30a) zum Sperren der Drehung des Verriegelungselements (16), wenn das Verriegelungselement (16) entfernt von der Schraube (4).

7. Diebstahlsicherungsvorrichtung nach einem der Ansprüche 4 bis 6, **dadurch gekennzeichnet, dass** die gelenkige Lagerung (19) mindestens einen radialen Anschlag Endschalter (26a, 26b) und einen Axialanschlag Endschalter (29c, 29d) angepasst ist, um mit einem Ansatz zusammenwirken (21, 21b) des Verriegelungselements (16) zum Sperren der Drehung (D2) und Übersetzung (D1) des Verriegelungselements (16), wenn das Verriegelungselement (16) in der Riegelsperrstellung (4).

8. Diebstahlsicherungsvorrichtung nach einem der Ansprüche 4 bis 7, **dadurch gekennzeichnet, dass** die gelenkige Lagerung (19) eine Basis (23) mit einem Umfangslager (28) mit einem Verriegelungsvorsprung (28a), der bewegliche Anschlag (24) eine schnabelförmigen Vorsprung (24a) elastisch gegen den Anschlagvorsprung (28a gedrückt), so daß in der Haltestellung, der Schnabel (24a) mit dem Halter (17) um die Drehung des beweglichen Anschlags (24) zu blockieren und in der befreienden Position schwenkt der bewegliche Anschlag (24) in der Umfangslager (28), bis die Nase (24a) in Eingriff mit dem Anschlagvorsprung (28a) der Umfangslager (28) zum Sperren der Drehung des beweglichen Anschlags (24).

9. Diebstahlsicherungsvorrichtung nach einem der vorhergehenden Ansprüche, **dadurch gekennzeichnet, dass** das Verriegelungselement (16) eine Form eines zylindrischen Stiftes geeignet ist, in einem Hohlraum (22) entsprechend dem Bolzen (4) in Eingriff ist und dessen Basis zumin wenigstens eine radiale Lasche (21) weg von der Unterseite.

10. Diebstahlsicherungsvorrichtung nach einem der vorhergehenden Ansprüche, mit den Ansprüchen 6 und 8 in Eingriff, **dadurch gekennzeichnet, dass** der bewegliche Anschlag (24) und das Verriegelungselement (16) koaxial sind, der bewegliche Anschlag (24) mit mindestens einer Sektor (25a, 25b), durch die die radialen Wände tragen jeweils die Schwenk Axialanschlag (27a, 27b) und der radialen Anschlag Endschalter (26a, 26b).

11. Diebstahlsicherungsvorrichtung nach einem der vorhergehenden Ansprüche, mit den Ansprüchen 7 und 8 und 9 in Eingriff, **dadurch gekennzeichnet, daß** die Basis (23) eine zentrale Lagerung (29) in dem beweglichen Anschlag (24) untergebracht ist, wobei das Mittellager (29) mit wenigstens einem axialen Einschnitt (29a, 29b), wobei ein Stift (21a, 21b) des Verriegelungselements (16), der Translationsbewegung in die erste (D1) des Sperrglied (16) befreienden Position und daß eine Seitenwand der Nut (29a, 29b) den festen radialen Anschlag (29c, 29d) des Verriegelungselementes (16) geeignet ist, gemäß dem zweiten Verschiebungs drehen (D2) in der Freigabestellung in dem mittleren Lager (29) und der Oberseite des Zentrallagers (29), der den Axialschub Hub (29c, 29d).

12. Diebstahlsicherungsvorrichtung nach einem der vorhergehenden Ansprüche, **dadurch gekennzeichnet, dass** sie ein elastisches Mittel (20) umfasst, die zwischen dem Verriegelungselement (16) und dem beweglichen Anschlag (24), so dass der bewegliche Anschlag (24) vorgespannt ist, Torsions- und das Verriegelungselement (16) in Torsion und translatorisch in Richtung der Schraube (4) vorgespannt ist.

13. Diebstahlsicherungsvorrichtung nach Anspruch 12, **dadurch gekennzeichnet, dass** die elastischen Mittel (20) eine Spiralfeder ausgelegt ist, in Druck und Torsion vorgespannt werden.

14. Diebstahlsicherungsvorrichtung nach einem der vorhergehenden Ansprüche, **dadurch gekennzeichnet, dass** sie umfasst:
- Ein erster und ein zweiter Teil des Schloßkörpers (3, 9),
- Der Sperr Stators eingefügt der zweite Abschnitt des Schlosskörpers (9), der erste Teil des Verriegelungskörpers (3), die die Mittel zum Verriegeln und superlocking (15), und
- Die Schutzkappe (6) mit einem Vorsprung (31) in dem ersten Teil des Schlosskörpers (3), dessen Ende sich eine hakenForm umgibt einen Abschnitt einer Lanze des Organs Halter (17) aufweist.

## Claims

1. Anti-theft device for a motor vehicle steering column comprising:
- locking means comprising a bolt (4) mounted mobile between a unlocked position in which it is intended to be disposed away from a steering column and a locked position in which it is intended to block the said column,
- means deadlocking (15) having a locking element (16) configured for securing the bolt (4) in the locked position, resilient means (20) and a retainer (17) having a first end (17a) is stator fixed to lock the antitheft device, wherein the deadlocking means (15) further comprises an articulated support (19) configured to define:
- a retaining position wherein the retaining member (17) allows the articulated support (19) to retain the locking member (16) away from the bolt (4), and
- A freeing position in which the articulated support (19) guides the locking element (16) to the bolt (4) in two successive movements of distinct direction (Dl, D2) for locking said bolt (4) in the locked position, consecutively withdrawal of the retainer (17),
**characterized in that** said fulcrum (19) comprises a movable stop (24) configured to receive the locking element (16) when the bolt is in the unlocked position, the movable stop (24) being further adapted to rotate between:
- a retaining position wherein the movable stop (24) is retained by the retaining member (17) and holds the locking element (16) away from the bolt (4), and
- a freeing position in which the articulated support (19) guides the locking element (16) to the bolt (4) in two successive movements of distinct directions (Dl, D2) for locking said bolt (4) in the locked position, consecutively withdrawal of the retainer (17).

2. Antitheft device according to claim 1, **characterized in that** a first displacement (D1) of the locking element (16) is a translation and a second displacement (D2) of the blocking element (16) is rotated.

3. Antitheft device according to claim 2, **characterized in that** the movable stop (24) is subject to torsion to the retaining member (17) and said locking member (16) is loaded in torsion and in translation towards said bolt.

4. Antitheft device according to claim 3, **characterized in that** in the retaining position, the articulated support (19) blocks the drive (D1) and the rotation (D2) of the blocking element (16) and **in that** the liberating position, rotation of the movable stop (24) disengages the locking in translation of the locking element (16) towards said latch (4) and the translation of said locking member (16) disengages the locking in rotation of the locking element (16).

5. Antitheft device according to claim 4, **characterized in that** the movable stop (24) comprises at least one pivotable axial stop (27a, 27b) can be pivoted between the holding position wherein said pivotable axial stop (27a, 27b) cooperates with a lug (21, 21b) of the locking element (16) for blocking the translation (D1) of the locking member (16) to the bolt (4) and the freeing position in which the pivotable axial stop (27a , 27b) is spaced from said lug (21, 21b).

6. Antitheft device according to one of Claims 4 or 5, **characterized in that** the articulated support (19) comprises at least one fixed radial stop (30a) capable of cooperating with a lug (21, 21b) of the blocking member (16) biased against torsion of said fixed radial stop (30a) for locking the rotation of the locking element (16) when the locking element (16) is remote from the bolt (4).

7. Antitheft device according to one of Claims 4 to 6, **characterized in that** the articulated support (19) has at least one radial stop limit switch (26a, 26b) and an axial stop limit switch (29c, 29d) adapted to cooperate with a lug (21, 21b) of the locking element (16) for locking the rotation (D2) and the translation (D1) of the locking element (16) when the locking member (16) is in the bolt blocking position (4).

8. Antitheft device according to one of Claims 4 to 7, **characterized in that** the articulated support (19) comprises a base (23) having a peripheral bearing (28) having a locking projection (28a), the movable stop (24) has a beak-shaped projection (24a) elastically urged against the stop projection (28a) so that in the retaining position, the beak (24a) cooperating with the retainer (17) to block the rotation of the movable stop (24) and in the liberating position, the movable stop (24) pivots in said peripheral bearing (28) until the beak (24a) engages with the stop projection (28a) of the peripheral bearing (28) for locking the rotation of the movable stop (24).

9. Antitheft device according to one of the preceding claims, **characterized in that** said locking member (16) has a shape of a cylindrical pin adapted to engage in a cavity (22) corresponding the bolt (4) and whose base comprises at least one radial lug (21) away from the bottom.

10. Antitheft device according to any preceding claim, engaged with claims 6 and 8, **characterized in that** the movable stop (24) and the locking element (16) are coaxial, the movable stop (24) having at least one sector (25a, 25b) through which the radial walls respectively bear the pivoting axial stop (27a, 27b) and the radial stop limit switch (26a, 26b).

11. Antitheft device according to any preceding claim, engaged with the claims 7 and 8 and 9, **characterized in that** the base (23) has a central bearing (29) housed in the movable stop (24), said center bearing (29) having at least one axial notch (29a, 29b) wherein a pin (21a, 21b) of the locking element (16) is capable of translating movement in the first (D1) of the blocking member (16) liberating position and **in that** a side wall of the notch (29a, 29b) carries the fixed radial stop (29c, 29d), the locking element (16) being adapted to rotate according to the second displacement (D2) in the freeing position in the central bearing (29) and the top of the central bearing (29) carrying the axial thrust stroke (29c, 29d).

12. Antitheft device according to one of the preceding claims, **characterized in that** it comprises an elastic means (20) interposed between said locking member (16) and said movable stop (24) so that the movable stop (24) is biased torsional and said locking member (16) is biased in torsion and in translation towards the bolt (4).

13. Antitheft device according to claim 12, **characterized in that** said elastic means (20) comprises a coiled spring adapted to be prestressed in compression and torsion.

14. Antitheft device according to one of the preceding claims, **characterized in that** it comprises:
- a first and a second portion of lock body (3, 9),
- a lock stator inserted in said second portion of lock body (9), the first part of lock body (3) receiving the means for locking and superlocking (15), and
- a protective cover (6) having a tab (31) extending in the first part of the lock body (3) whose end has a hook-shape surrounding a section of a lance of the organ retainer (17).
